# EUROPÄISCHE PATENTANMELDUNG

(11) **EP 1 345 313 A1**
(43) Veröffentlichungstag der Anmeldung: **17.09.2003**
(21) Anmeldenummer: 03001415.3
(22) Anmeldetag: 22.01.2003
(51) Int. Cl.: H02P 7/638, H02P 7/622

(54) **Verfahren zur Steuerung eines Wechselstrommotors sowie Wechselstrommotor mit Schaltungsanordnung zur Durchführung des Verfahrens**

(30) Priorität: 08.03.2002 DE 10210318
(71) Anmelder: Hanning Elektro-Werke GmbH & Co. KG, 33813 Oerlinghausen (DE)
(72) Erfinder: Schweers, André, 32052 Herford (DE)
(74) Vertreter: TER MEER STEINMEISTER & PARTNER GbR

(57) **Zusammenfassung**

Ein Verfahren zur Steuerung eines Wechselstrommotors sieht vor, dass an dem Motor über eine Phasenanschnittsteuerung eine Netzeingangsspannung angelegt wird, die größer als die bei der Wicklungsauslegung zugrundegelegte Spannung ist, und dass beim Hochlaufen des Motors und entsprechend niedrigen Drehzahlen die volle Netzeingangsspannung eingespeist wird, bei der höheren Betriebsdrehzahl dagegen die angelegte Spannung über die Phasenanschnittsteuerung reduziert wird.

## Beschreibung

Die Erfindung betrifft ein Verfahren zur Steuerung eines Wechselstrommotors.

Beim Einsatz von Wechselstrommotoren, insbesondere in der Antriebstechnik, z.B. zum Antreiben von Kompressoren oder Vakuumpumpen, wird vielfach bereits bei niedrigen Drehzahlen ein relativ hohes Drehmoment benötigt. Die Motoren sollen auch unter erschwerten Bedingungen, z.B. bei Unterspannung oder unterschiedlichen Frequenzen (50/60 Hz) sicher anlaufen. Besonders kritisch ist die Situation bei Einphasen-Wechselstrommotoren, die zwangsläufig nur über ein geringes Drehmoment bei niedrigen Drehzahlen verfügen.

Andererseits ist der Drehmomentbedarf nach dem Hochlaufen zumeist relativ gering.

Wenn daher unter allen in der Praxis auftretenden Bedingungen ein sicheres Hochlaufen gewährleistet sein soll, muß ein Motor so dimensioniert sein, dass er in Bezug auf den Drehmomentbedarf bei Erreichen der Betriebsdrehzahl "überdimensioniert" ist.

Das hat zur Folge, dass Motoren eingesetzt werden müssen, die, bezogen auf den normalen Dauerbetrieb, unnötig groß, unnötig schwer und unnötig teuer sind.

Der Erfindung liegt daher die Aufgabe zugrunde, einen Wechselstrommotor so zu steuern, dass sein Anlaufdrehmoment im Vergleich zu dem Drehmoment beim Lauf mit der üblichen Betriebsdrehzahl erhöht ist. Ferner soll ein Wechselstrommotor mit einer entsprechenden Steuerung geschaffen werden.

Die gestellte Aufgabe wird erfindungsgemäß bei einem Verfahren der obigen Art dadurch gelöst, dass an dem Motor über eine Phasenanschnittsteuerung eine Netzeingangspannung angelegt wird, die größer als die bei der Wicklungsauslegung zugrundegelegte Spannung ist, und dass beim Hochlaufen des Motors und entsprechend niedrigen Drehzahlen die volle Netzeingangsspannung eingespeist wird, bei der höheren Betriebsdrehzahl dagegen die angelegte Spannung über die Phasenanschnittsteuerung reduziert wird.

Es ist an sich bekannt, dass das erzielbare Drehmoment eines Elektromotors mit der Versorgungsspannung im wesentlichen quadratisch bis hin zu einer Sättigungsgrenze ansteigt. Die DE 2 615 768 A1 beschreibt eine durch einen Asynchron-Motor angetriebene Arbeitsmaschine mit wechselndem Drehmomentbedarf. Durch eine Phasenanschnittsteuerung wird die Betriebsspannung des Asynchronmotors an das jeweils erforderliche Drehmoment angepaßt. Dies wird in der zugehörigen Zusatzanmeldung 3 016 954 weiter ausgeführt. Die DE 2 951 839 A1 befaßt sich mit einem elektrischen Antrieb für Hebezeuge, bei dem das Drehmoment zum Antreiben des Motors durch eine Phasenanschnittsteuerung beeinflußbar ist. Die Drehmomentsteuerung wird hier im wesentlichen für einen ruckfreien Bremsbetrieb eingesetzt. Die DE 3 731 469 verwendet eine Phasenanschnittsteuerung bei einem Asynchronmotor zur Einregelung einer konstanten Drehzahl.

Bei diesen bekannten Lösungen wird der Zusammenhang von Motorspannung und Drehmoment für verschiedene Zwecke genutzt. Ein Hinweis zur Überwindung der prinzipbedingten Anlaufschwäche von Wechselstrommotoren findet sich in den genannten Druckschriften jedoch nicht.

Heute werden viele sogenannte Wechsel- oder Drehstromsteller für verschiedene Anwendungen (Dimmer, Drehzahlsteuerung von Motoren usw. eingesetzt). Diese Elemente verändern abhängig vom eingestellten Schaltwinkel α die Ausgangsspannung Uv für einen Verbraucher. Es handelt sich dabei um eine Phasenanschnittsteuerung. Für den Wert α = 0, der zumindest annähernd erreicht werden kann, entspricht die Ausgangsspannung dem Wert der Netzeingangsspannung Un, während mit Hilfe der Phasenanschnittsteuerung die geringere Spannung Uv erzeugt werden kann.

Eine derartige Schaltung steht zu geringen Kosten zur Verfügung und kann als Basis für die erfindungsgemäße Motorsteuerung dienen.

Erfindungsgemäß wird somit der Motor nur während des Hochlaufens mit der vollen Netzspannung beaufschlagt, während bei dem anschließenden Dauerbetrieb die mit Hilfe der Phasenanschnittssteuerung reduzierte Spannung angelegt wird. Bei einem Dauerbetrieb mit der höheren, nicht reduzierten Netzspannung würde sich der Motor zu stark erwärmen.

Das Signal zur Änderung des Schaltwinkels bei der Phasenanschnittsteuerung und damit zur Reduzierung der Spannung nach dem Hochlaufen des Motors kann mit Hilfe eines Drehgebers oder auch mit Hilfe eines Zeitgliedes erzeugt werden. Dieses Signal kann abgegeben werden, wenn mit Hilfe eines Drehgebers festgestellt wird, dass der Motor eine bestimmte Drehzahl überschritten hat. Wenn nach Erfahrungswerten ermittelt werden kann, in welcher Zeit die Anlaufphase beendet ist, kann die Umschaltung auch mit Hilfe eines Zeitgliedes gesteuert werden.

## Patentansprüche

1. Verfahren zur Steuerung eines Wechselstrommotors, **dadurch gekennzeichnet, dass** an dem Motor über eine Phasenanschnittsteuerung eine Netzeingangsspannung angelegt wird, die größer als die bei der Wicklungsauslegung zugrundegelegte Spannung ist, und dass beim Hochlaufen des Motors und entsprechend niedrigen Drehzahlen die volle Netzeingangsspannung eingespeist wird, bei der höheren Betriebsdrehzahl dagegen die angelegte Spannung über die Phasenanschnittsteuerung reduziert wird.

2. Verfahren zur Steuerung eines Wechselstrommotors nach Anspruch 1, **dadurch gekennzeichnet, dass** die Beendigung der Hochlaufphase mit Hilfe eines Drehgebers ermittelt wird.

3. Verfahren zur Steuerung eines Wechselstrommotors nach Anspruch 1, **dadurch gekennzeichnet, dass** die Beendigung der Hochlaufphase mit Hilfe eines Zeitglieds ermittelt wird.

4. Wechselstrommotor mit Schaltungsanordnung zur Durchführung des Verfahrens, **gekennzeichnet durch** eine Phasenanschnittsteuerung im Netzanschluß des Motors, die derart ausgebildet ist, dass sie in der Anlaufphase eine höhere Spannung durchläßt als bei Erreichen der normalen Betriebsdrehzahl.

5. Wechselstrommotor nach Anspruch 4, **dadurch gekennzeichnet, dass** der Motor für eine Spannung ausgelegt ist, die geringer als die Netzspannung ist.

6. Wechselstrommotor nach Anspruch 4, **dadurch gekennzeichnet, dass** ein Drehgeber zur Ermittlung des Abschlusses der Anlaufphase vorgesehen ist.

7. Wechselstrommotor nach Anspruch 4, **dadurch gekennzeichnet, dass** ein Zeitglied zur Ermittlung des Abschlusses der Anlaufphase vorgesehen ist.
